# EUROPÄISCHE PATENTSCHRIFT

(11) **EP 0 913 295 B1**
(45) Veröffentlichungstag und Bekanntmachung des Hinweises auf die Patenterteilung: **04.09.2002**
(21) Anmeldenummer: 98120195.7
(22) Anmeldetag: 30.10.1998
(51) Int. Cl.: B60P 1/48, B60P 1/54

(54) **Fahrzeug zum Aufnehmen und transportieren von Lasten**
Vehicle for taking up and transporting of loads
Véhicule pour lever et transporter des charges

(30) Priorität: 31.10.1997 DE 19748313
(43) Veröffentlichungstag der Anmeldung: 06.05.1999
(73) Patentinhaber: Bauch, Ludwig, 85116 Egweil (DE)
(72) Erfinder: Bauch, Ludwig, 85116 Egweil (DE)
(74) Vertreter: Sasse, Volker, Dipl.-Ing.

(56) Entgegenhaltungen:
- EP-A- 0 191 683
- DE-A- 1 781 017
- DE-U- 8 118 947
- FR-A- 1 442 695
- US-A- 1 337 667

## Beschreibung

Die Erfindung betrifft ein Fahrzeug zum Aufnehmen und Transportieren von Lasten, insbesondere von Rohrbündeln eines Wärmetauschers gemäß dem Oberbegriff des Patentanspruchs 1.

Aus der US 3 685 673 ist ein Fahrzeug bekannt, an dessen Fahrzeugrahmen eine Hebevorrichtung für Lasten vorgesehen ist. Diese Hebevorrichtung wird von zwei mehrgliedrigen Gelenkarmen gebildet, an deren Enden ein Elektromagnet zur Aufnahme der Last gelenkig gehalten ist. Diese bekannte Vorrichtung weist jedoch den Nachteil auf, daß die Last beim Heben bzw. Absenken unkontrollierte Schwenkbewegungen ausführen kann, die bei empfindlichen Lasten zu deren Beschädigung führen können. Insbesondere können mit dieser bekannten Vorrichtung keine Wärmetauscher-Rohrbündel transportiert werden, da die dünnwandigen Rohre von dieser Hebevorrichtung verformt werden könnten.

Der Erfindung liegt die Aufgabe zugrunde, ein Fahrzeug mit einer Hebevorrichtung der eingangs genannten Art zu schaffen, mit dem auch empfindliche und gleichzeitig schwere Lasten, insbesondere Rohrbündel eines Wärmetauschers, sicher gehoben und transportiert werden können.

Aus der gattungsbildenden EP-A-0 191 683 ist ein Fahrzeug zum Anheben und Transportieren von Lasten bekannt, welches vier gelenkig abgestützte Schwenkarme aufweist. Diese Schwenkarme sind oberseitig über einen Rahmen verbunden, an dem ein Tragekorb hängend gehalten ist. Die Schwenkarme bilden zusammen mit dem Rahmen Parallelogramme, die über einen Hydraulikantrieb verstellbar sind. Über diesen Verstellmechanismus kann der Tragekorb einerseits auf dem Boden und andererseits auf dem Fahrzeug abgesetzt werden.

Aus der FR-A-1 442 695 ist ein weiteres Fahrzeug bekannt, das ebenfalls zum Anheben und Transportieren von Lasten geeignet ist. Dieses Fahrzeug weist einen Fahrzeugrahmen auf, an dem Schwenkarme verschwenkbar abgestützt sind. Die oberen Enden der Schwenkarme sind über einen Rahmen gelenkig verbunden, so daß sich eine Parallelogrammführung ergibt. Zum Verschwenken dieses Parallelogramms ist ein Hydraulikzylinder vorgesehen. Am hinteren Ende dieses Rahmens ist eine Kette zum Erfassen der Ladung gehalten. Außerdem ist oberseitig auf dem Rahmen ein Wagen verfahrbar abgestützt, der mit Hebemitteln zum Umschlagen der Ladung ausgerüstet sein kann.

Diese Aufgabe wird erfindungsgemäß mit den Merkmalen des Patentanspruchs 1 gelöst.

Die vier am Fahrzeugrahmen abgestützten Schwenkarme ergeben zusammen mit dem Oberrahmen eine Parallelogrammführung, durch die Oberrahmen stets in horizontaler Lage gehalten ist. Da der Oberrahmen die Greifmittel zur Aufnahme der Last trägt ist sichergestellt, daß die Last während des gesamten Hebevorgangs stets in horizontaler Lage gehalten ist und keine unkontrollierten Schwenkbewegungen ausführen kann. Damit können mit dieser Hebevorrichtung auch sehr empfindliche und gleichzeitig schwere Lasten wie Rohrbündel von Wärmetauschern gehoben und transportiert werden, ohne daß diese beim Heben beschädigt werden. Die vier am Fahrzeugrahmen abgestützten Schwenkarme vergrößern zudem nicht die Fahrzeugbreite, wobei trotzdem zwischen den einzelnen Schwenkarmen ausreichender Platz zur Aufnahme der Last beim Transport bleibt. Aus diesem Grund kann das Fahrzeug ohne Begleitschutz öffentliche Straßen befahren, was die anfallenden Transportkosten erheblich reduziert. Die Schwenkarme sind vorzugsweise ausgehend von einer vertikalen Stellung in beide Richtungen verschwenkbar, so daß der Oberrahmen mit den Greifmitteln zur Aufnahme der Last von einer rückseitig über das Heck hinausragenden Lage im Kreisbogen in eine über dem Fahrzeugrahmen befindlichen Lage verstellbar ist. Auf diese Weise kann eine sich unmittelbar hinter dem Fahrzeugheck befindliche Last von den Greifmitteln einfach erfaßt und in eine über dem Fahrzeugrahmen befindliche Lage gehievt werden. Anschließend kann die Last bequem transportiert werden, da keine Teile der Hebevorrichtung über das Fahrzeugheck hinausragen und auch die Höhe des Oberrahmens in der Transportstellung der Last ausreichend niedrig gewählt werden kann, so daß sich keine Probleme beim Durchfahren von Unterführungen ergeben. Insbesondere sind zur Aufnahme der Last keine gesonderten Hebemittel wie ortsfeste Kräne usw. erforderlich, so daß der Transport und die Anlieferung der Lasten unabhängig von der örtlichen Infrastruktur stets gewährleistet ist. Das Fahrzeug ist vorzugsweise ein Lastkraftwagen, wobei alternativ auch ein Anhänger oder Sattelauflieger in Frage kommt.

Um mit dem Fahrzeug auch sehr lange Rohrbündel heben und transportieren können, müßten die Schwenkarme sehr lang ausgelegt werden, was sich wiederum ungünstig auf die Fahrzeughöhe auswirkt. Hierzu ist am Oberrahmen unterseitig ein Unterrahmen längsverschiebbar zu halten, der die Greifmittel trägt. Nach dem Hochheben der Last durch Verschwenken der Schwenkarme in eine annähernd vertikale Lage kann der Unterrahmen nach vorne verschoben werden, so daß auch eine lange Last trotz kurz ausgelegter Schwenkarme über dem Fahrzeugrahmen zu liegen kommt. Erst anschließend werden die Schwenkarme weiter nach vorne verschwenkt, um die Last auf dem Fahrzeug abzusetzen.

Die gemäß Anspruch 2 vorgeschlagene Ausbildung der Greifmittel in Form von zwei gegenüberliegenden, verschwenkbaren Platten ist insbesondere bei der Aufnahme von Wärmetauscher-Rohrbündeln wichtig, da diese von den Platten großflächig und damit schonend ergriffen werden. Hierdurch wird jede Deformation des Rohrbündels verhindert, wobei die Last trotzdem durch die sich gegenseitig nach unten annähernden Platten sicher ergriffen wird. Im allgemeinen reichen zwei einander gegenüberliegende und verschwenkbare Platten zum Ergreifen der Last aus. Lediglich bei sehr langen Lasten ist es vorteilhafter, auf jeder Lastseite mehrere Platten vorzusehen, so daß sich der Greifdruck der Platten gleichmäßig über die gesamte Last verteilt.

Um die Aufnahme der Last zu vereinfachen, ist es gemäß Anspruch 3 vorteilhaft, die Greifmittel über einen Drehkranz mit annähernd vertikaler Drehachse zu halten. Dieser Drehkranz kann damit einen Winkel zwischen der Längsachse des Fahrzeugs und der Längsachse der Last ausgleichen, so daß das Fahrzeug nicht in exaktem Winkel auf die Last zufahren muß. Damit werden umständliche Rangierbewegungen des Fahrzeugs eingespart, so daß die Aufnahme der Last insgesamt schneller erfolgen kann. Es reicht dabei völlig aus, wenn der Drehkranz nur einen beschränkten Drehwinkel von beispielsweise ± 20° für die Greifinittel ermöglicht. Ein 360° überstreichender Drehkranz bietet jedoch den Vorteil, daß das Fahrzeug in völlig beliebiger Richtung auf die Last zufahren kann, ohne daß die Aufnahme der Last hierdurch beeinträchtigt wird. Dies ist insbesondere bei beengten Platzverhältnissen, wie sie insbesondere in Industrieanlagen vorzufinden sind, von besonderer Bedeutung.

Eine besonders vorteilhafte Ausbildung der Greifmittel ergibt sich aus Anspruch 4. Die Platten werden dabei um voneinander beabstandete Schwenkachsen besonders platzsparend vorzugsweise am Drehkranz schwenkbar gehalten. Grundsätzlich könnten die Schwenklager unmittelbar an den Platten vorgesehen sein. Da jedoch die plattenartige Ausbildung der Greifmittel nur im Berührungsbereich der Greifmittel mit der Last wichtig ist, können die Schwenklager auch an mit den Platten fest verbundenen Armen vorgesehen sein. Hierdurch wird Material eingespart und gleichzeitig die zu bewegende Masse reduziert, so daß die Antriebe insgesamt entsprechend schwächer ausgelegt werden können. Der die Platten oder Arme überbrückende Antrieb ist besonders platzsparend untergebracht, so daß der Raum zur Aufnahme der Last von den Antrieben kaum reduziert wird. Zudem bietet die vorgeschlagene Ausbildung der Greifmittel den besonderen Vorteil, daß die Platten trotz Verwendung eines gemeinsamen Antriebs für die einander gegenüberliegenden Platten keine Schwenkfreiheit besitzen. Damit wird die aufzunehmende Last besonders sicher ergriffen.

Da die aufzunehmenden Rohrbündel eine zylindrische Außenkontur aufweisen, ist es gemäß Anspruch 5 vorteilhaft, die Platten lastseitig konkav auszubilden. Die Platten können dabei zylindrisch gebogen sein, so daß sie die Rohrbündel besonders großflächig ergreifen. Allerdings setzt dies voraus, daß der Krümmungsradius der Platten dem Radius des Rohrbündels entspricht. Um die Greifmittel universeller einsetzen zu können, ist es daher günstig, die Platte um mindestens eine horizontale Linie abzuknicken. In diesem Fall werden die Rohrbündel zwar nur linienhaft von den Platten ergriffen, eine ausreichende Greifsicherheit ist jedoch auch bei unterschiedlichen Rohrbündeldurchmessern gewährleistet.

Durch die besondere Ausbildung der Platten mit von der Last weggebogenen freien Enden gemäß Anspruch 6 ist sichergestellt, daß die untere Kante der Platten nicht gegen die Last drückt und diese verformt. Damit ist die aufzunehmende Last selbst dann ausreichend geschützt, wenn der Oberrahmen versehentlich zu wenig abgesenkt wird, so daß die Last von den Platten nicht ordnungsgemäß ergriffen wird.

Zu weiteren Verbesserung des Schutzes der Last sind die Platten gemäß Anspruch 7 elastisch nachgiebig ausgebildet. Dies stellt sicher, daß sich die Platten bei zu starkem gegenseitigen Zusammendrücken elastisch verformen und auf diese Weise eine Deformation der Last verhindern.

Insbesondere beim Transport von Wärmetauscher-Rohrbündeln kann es vorkommen, daß sich in den Rohren noch Flüssigkeiten wie Öle oder andere Chemikalien befinden. Um zu vermeiden, daß diese Flüssigkeiten beim Transport des Rohrbündels auf die Straße gelangen und damit Umweltschäden hervorrufen, wird gemäß Anspruch 8 vorgeschlagen, am Fahrzeugrahmen eine Wanne zur Aufnahme dieser Flüssigkeiten vorzusehen. Grundsätzlich kann diese Wanne relativ schwach dimensioniert werden, wenn die Last beim Transport von den Greifmitteln der Hebevorrichtung gehalten wird. Alternativ ist es jedoch auch vorstellbar, die Wanne derart steif auszubilden, daß die Last in dieser Wanne abgelegt werden kann, so daß die Greifmittel während des Transportes entlastet sind. Vorzugsweise besitzt die Wanne an ihrer tiefsten Stelle einen Auslaß, um die aufgenommenen Flüssigkeiten einfach entsorgen zu können.

Eine vorteilhafte Weiterentwicklung der Wanne ergibt sich aus Anspruch 9. Durch die vorgeschlagene Längenverstellbarkeit der Wanne wird eine günstige Anpassung der Wannenlänge an die Lastlänge erreicht, was insbesondere bei sehr unterschiedlichen Lastlängen vorteilhaft ist. Insbesondere ist es vorstellbar, daß die Wanne zur Aufnahme besonders langer Lasten in einem gewissen Teilbereich über das Fahrzeugheck hinausragt, während sie sich zur Aufnahme kürzerer Lasten innerhalb des Fahrzeugrahmens befindet.

Zur Vergrößerung des Schwenkwinkels der Schwenkarme der Hebevorrichtung ist es gemäß Anspruch 10 vorteilhaft, daß mindestens zwei der Schwenkarme eine gebogene oder abgewinkelte Form aufweisen. Vorzugsweise ist der obere Bereich der beiden vorderen Schwenkarme zum Fahrzeugheck hin gebogen, so daß der Oberrahmen der Hebevorrichtung vom Fahrzeug aus gesehen, weiter nach hinten und tiefer abgesenkt werden kann. Dies ist insbesondere dann von Bedeutung, wenn die Last unmittelbar vom Boden aufgenommen werden muß.

Greift der Antrieb am Schwenkarm gemäß Anspruch 11 in dessen Bogen oder Winkel an, so ergibt sich der besondere Vorteil, daß der Antrieb platzsparend zwischen den Schwenkarmen vorgesehen werden kann, wobei er trotzdem den erhöhten Schwenkwinkel der Schwenkarme überstreicht. Dies ergibt sich durch die vergrößerte Länge des im Bogen oder Winkel des Schwenkarmes angreifenden Antriebs, wobei der Antrieb trotzdem einen günstigen Angriffswinkel zum Schwenkarm aufweist.

Eine platzsparende und trotzdem ausreichend stabile Ausbildung der Schwenkarme ergibt sich aus Anspruch 12. Die Erstellung des Schwenkarms aus zwei voneinander beabstandeten Wangen ermöglicht ein einfaches Übergreifen des Fahrzeugrahmens vom Schwenkarm. Damit verbreitert der Schwenkarm das gesamte Fahrzeug nur geringfügig um die Dicke der äußeren Wange. Diese äußere Wange kann jedoch schwächer als die innere Wange ausgebildet werden, da der Oberrahmen die äußere Wange des Schwenkarmes auf Zug und die innere Wange auf Druck belastet.

Um ein Kippen des Fahrzeugs beim Aufnehmen oder Absetzen der Last nach hinten zu vermeiden, wird gemäß Anspruch 13 vorgeschlagen, am Fahrzeugrahmen ausfahrbare Stützen vorzusehen. Diese werden vor dem Aufnehmen bzw. Absetzen der Last vom Fahrzeugheck aus nach hinten ausgefahren und zur Abstützung des Fahrzeugs auf den Boden abgesenkt. Vorzugsweise sind die Stützen in Fahrzeuglängsrichtung verschiebbar, so daß sie einfach und platzsparend innerhalb des Fahrzeugrahmens untergebracht werden können. Die Stützen behindern in diesem Fall trotzdem das Aufnehmen bzw. Absetzen der Last in keiner Weise, da die Last stets eine geringere Breite als der lichte Abstand der Schwenkarme der Hebevorrichtung aufweist, so daß sie auch zwischen den Stützen ausreichend Platz findet.

Die zur Betätigung aller beweglichen Teile der Hebevorrichtung notwendigen An triebe werden gemäß Anspruch 14 vorteilhaft von Hydraulikzylindern bzw. Hydraulikmotoren gebildet. Hydraulikantriebe entwickeln trotz kompaktem und damit platzsparendem Aufbau sehr hohe Kräfte, so daß mit ihnen auch relativ schwere Lasten hebbar sind. Außerdem können die Hydraulikantriebe vorteilhaft von der üblicherweise im Fahrzeug vorgesehenen Hydraulikeinrichtung versorgt werden.

Schließlich wird gemäß Anspruch 15 vorgeschlagen, zur Erleichterung der Bedienung der Hebeeinrichtung die Antriebe von einer Fernsteuerkonsole bedienbar auszubilden. Auf diese Weise kann der Fahrzeugführer den Hebe- bzw. Absenkvorgang der Last vom Fahrzeugheck aus gut überwacht durchführen. Die Fernsteuerkonsole kann dabei über vorzugsweise elektrische Verbindungen mit dem Fahrzeug verbunden sein, um die Steuerbefehle an die Antriebe zu übermitteln. Alternativ ist es jedoch auch vorstellbar, die Daten von der Fernsteuerkonsole zum Fahrzeug drahtlos zu übermitteln, um dem Fahrzeugführer noch mehr Freiheit zur Wahl eines geeigneten Ortes zur Überwachung des Hebe- bzw. Senkvorgangs zu geben.

Das erfindungsgemäße Fahrzeug und der Beladevorgang werden beispielhaft anhand der Zeichnung erläutert, ohne den Schutzumfang zu beschränken.

Es zeigt
- Figur 1: eine Seitenansicht eines Fahrzeugs beim Ergreifen einer auf dem Boden abgelegten Last,
- Figur 2: eine Schnittdarstellung des Fahrzeugs gemäß Fig. 1 bei aufgenommener Last,
- Figur 3: das Fahrzeug gemäß Figur 1 in der höchsten Lage der Last,
- Figur 4: das Fahrzeug gemäß Figur 3 nach dem Nachvorneschieben des Unterrahmens und
- Figur 5: das Fahrzeug gemäß Figur 4 nach dem Absenken der Last in die Transportstellung.

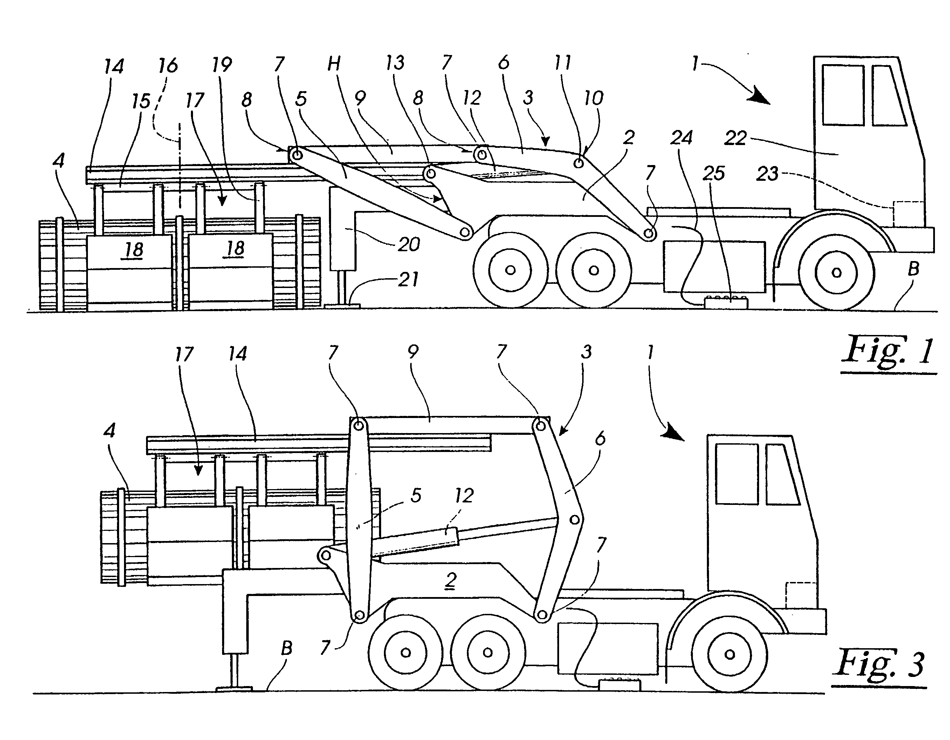

Figur 1 zeigt ein Fahrzeug 1 in Form eines Lastkraftwagens. Das Fahrzeug 1 weist einen Rahmen 2 auf, an dem eine Hebevorrichtung 3 für eine Last 4 abgestützt ist.

Die Hebevorrichtung 3 weist zwei hintere Schwenkarme 5 und zwei vordere Schwenkarme 6 auf, die über Gelenke 7 am Fahrzeugrahmen 2 schwenkbar gehalten sind. Am oberen Ende 8 der Schwenkarme 5, 6 ist über weitere Gelenke 7 ein Oberrahmen 9 angelenkt. Die Gelenke 7 der Schwenkarme 5, 6 bilden in jeder Lage des Oberrahmens 9 die Eckpunkte eines gedachten Parallelogramms, so daß der Oberrahmen 9 beim Verschwenken der Schwenkarme 5, 6 stets eine horizontale Lage einnimmt. Die vorderen Schwenkarme 6 besitzen eine im oberen Bereich nach hinten abgewinkelte Form. Hierdurch wird erreicht, daß die Schwenkarme 6 erst in der in Figur 1 dargestellten Lage am Fahrzeugrahmen 2 zur Anlage kommen, wodurch sich der maximal erreichbare Schwenkwinkel für die in Figur 1 dargestellte Aufnahmestellung der Hebevorrichtung 3 ergibt. Im Winkel 10 der vorderen Schwenkarme 6 ist jeweils ein Gelenk 11 vorgesehen, an dem ein Antrieb 12 in Form eines Hydraulikzylinders angreift. Der Hydraulikzylinder greift mittig durch die doppelarmigen Schwenkarme 5, 6, so daß die Kraft am günstigsten übertragen wird, und die Schwenkarme 5, 6 ungehinderten Schwenkbereich haben. Das Gegenende des Antriebs 12 ist an einem heckseitig am Fahrzeugrahmen vorgesehenen Gelenk 13 abgestützt.

Am Oberrahmen 9 ist ein Unterrahmen 14 längsverschiebbar gehalten, an dem ein Drehkranz 15 mit vertikaler Drehachse 16 abgestützt ist. Dieser Drehkranz 15 hält Greifmittel 17 zum Erfassen der im vorliegenden Fall von einem Rohrbündel eines Wärmetauschers gebildeten Last 4. Die Greifmittel 17 werden von zwei Paaren einander gegenüberliegender Platten 18 gebildet, die über Arme 19 am Drehkranz 15 angelenkt sind.

Zur Vermeidung der Kippgefahr beim Aufnehmen bzw. Absetzen der Last 4 sind im Fahrzeugrahmen 2 nach hinten ausfahrbare Stützen 20 vorgesehen, deren Stützfüße 21 auf dem Boden B abstützbar sind. Die Stützen 20 sind dabei innerhalb des seitlichen Fahrzeugrahmens 2 verschiebbar gelagert, so daß der doppelarmige Schwenkarm 5 ungehindert über die ausgefahrenen Stützen 20 greifen kann. Die seitliche Längs-Lagerung der Stützen 20 im Fahrzeugrahmen 2 bietet ein breites Abstützen des Fahrzeugs 1, so daß die Hebevorrichtung 3 ungehindert dazwischen arbeiten kann. Alternativ oder zusätzlich kann im Bereich der Fahrzeugkabine 22 ein angedeutetes Gegengewicht 23 vorgesehen sein, das die Kippneigung des Fahrzeugs 1 beim Aufnehmen der Last 4 nach hinten vermindert.

Zur Überwachung und erleichterten Durchführung des Hebe- bzw. Absenkvorganges der Last 4 ist das Fahrzeug 1 über ein Kabel 24 mit einer Fernsteuerkonsole 25 verbunden, von dem aus alle Antriebe der Hebevorrichtung 3 steuerbar sind.

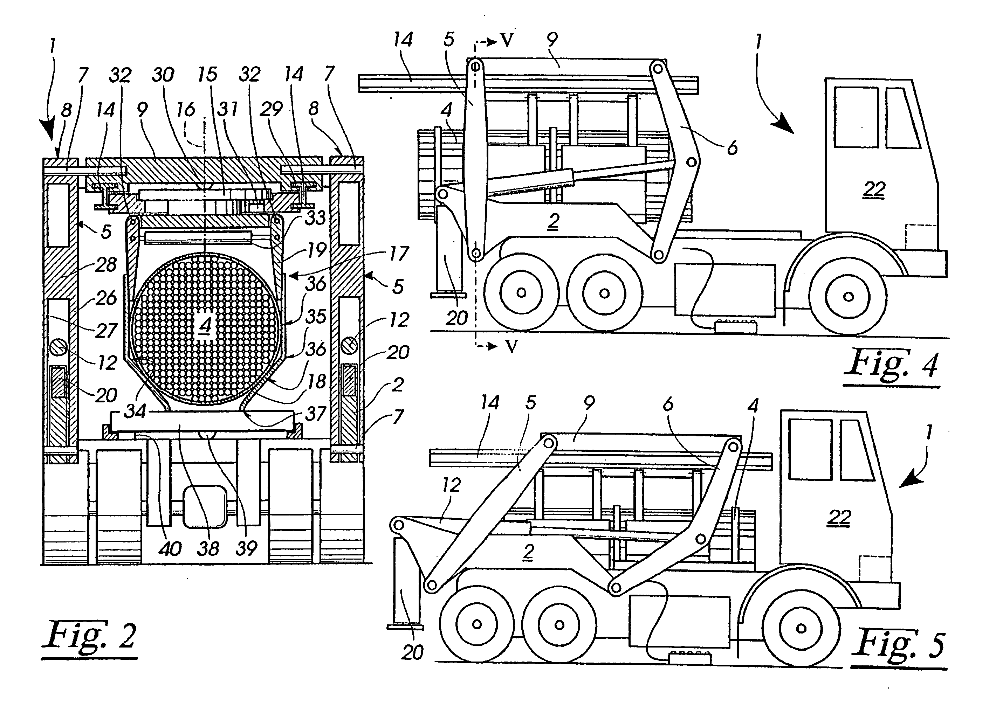

Die weitere Beschreibung des Fahrzeugs 1 erfolgt anhand der Schnittdarstellung der Figur 2, wobei gleiche Bezugszeichen gleiche Teile benennen. Die hinteren Schwenkarme 5 sind von zwei Wangen 26, 27 gebildet, die durch einen Abstandshalter 28 miteinander verbunden sind. Die innere Wange 26 besitzt aufgrund ihrer größeren Wandstärke gegenüber der äußeren Wange 27 eine erhöhte Steifigkeit, um der Druckbelastung durch den Oberrahmen 9, den Unterrahmen 14, der Greifmittel 17 und der Last 4 standzuhalten. Zwischen den beiden Wangen 26, 27 des Schwenkarms 5 ist der Fahrzeugrahmen 2 vorgesehen, so daß die Schwenkarme 5 die Fahrzeugbreite nur unwesentlich vergrößern, wobei trotzdem die lichte Weite zwischen den Schwenkarmen 5 zur Aufnahme der Last 4 ausreichend groß bleibt. Zwischen den Wangen 26, 27 der Schwenkarme 5 verläuft auch jeweils einer der Antriebe 12, der von einem Hydraulikzylinder gebildet ist. Die vorderen Schwenkarme 6 sind bis auf deren winkelige Ausbildung und das zusätzliche Gelenk 11 zum Angriff des Antriebs 12 in gleicher Weise wie die hinteren Schwenkarme 5 ausgebildet.

Am Oberrahmen 9 sind Führungen 29 vorgesehen, in denen der von H-förmigen Trägern gebildete Unterrahmen 14 verschiebbar geführt ist. Ein teilweise verdeckt dargestellter Antrieb 30 in Form eines Hydraulikzylinders sorgt für die Verschiebung des Unterrahmens 14 gegenüber dem Oberrahmen 9.

Der Drehkranz 15 wird von einem am Unterrahmen 14 abgestützten Antrieb 31 in Form eines Hydraulikmotors um die Achse 16 zur Drehung angetrieben. Dieser Antrieb 31 kann relativ schwach dimensioniert sein, da der Drehkranz 15 aufgrund seiner vertikalen Drehachse 16 keine Hebearbeit verrichten muß.

Am Drehkranz 15 sind die Arme 19 der Greifmittel 17 über voneinander beabstandete Schwenkachsen 32 schwenkbar gehalten. Etwas unterhalb der Schwenkachsen 32 werden die Arme 19 von einem Antrieb 33 in Form eines Hydraulikzylinders überbrückend ergriffen, der die Arme 19 zur Achse 16 zu oder von dieser weg verschwenkt. Zur Erzielung einer gleichmäßigen Druckkraft der an den Armen 19 gehaltenen Platten 18 ist zwischen jeweils zwei einander gegenüberliegenden Armen 19 ein Antrieb 33 vorgesehen.

Die an den Armen 19 gehaltenen Platten 18 besitzen eine winkelige Form, wobei deren der Last zugewandte Innenseite 34 konkav geformt ist. Insbesondere sind die Platten 18 um eine horizontal verlaufende Kante 35 winkelig abgebogen, so daß die Last 4 von jeder der Platten 18 an zumindest zwei horizontalen Linien 36 gehalten ist. Am unteren Ende 37 sind die Platten 18 von der Last 4 weggebogen, um eine Beschädigung der Last 4 bei falschem Ergreifen durch die Platten 18 zu verhindern.

Am Fahrzeugrahmen 2 zur Aufnahme von aus der Last 4 austretenden Flüssigkeiten ist eine in ihrer Länge verstellbare Wanne 38 gehalten, die sich in der Transportstellung genau unter der Last 4 befindet. Diese Wanne 38 wird in ihrer Länge von einem teilweise verdeckt dargestellten Antrieb 39 in Form eines Hydraulikzylinders in ihrer Länge verstellt. Die Wanne 38 besitzt an ihrer tiefsten Stelle eine Auslaßöffnung 40 zum Entleeren der von der Wanne 38 aufgenommenen Flüssigkeit.

Im weiteren wird das Beladen des Fahrzeugs 1 mit einer Last 4 anhand der Figuren 1 und 3 bis 5 erläutert. Nachdem das Fahrzeug 1 mit seinem Fahrzeugheck H auf die Last 4 zugefahren ist, werden die Stützen 20 nach hinten ausgefahren und die Stützfüße 21 auf den Boden B abgesenkt. Hierdurch wird ein Nachhintenkippen des Fahrzeugs 1 beim Beladevorgang verhindert. Die Stützen 5, 6 werden durch Betätigen der Antriebe 12 in die in Figur 1 dargestellte Lage verschwenkt, so daß die Greifmittel 17 die auf dem Boden B abgelegte Last 4 erfassen können. Nun wird der Drehkranz 15 so weit mit Hilfe des Antriebs 31 verdreht, daß die Platten 18 des Greifmittels 17 auf die Last 4 korrekt ausgerichtet sind. Durch Betätigen der Antriebe 33 des Greifmittels 17 werden die Platten 18 aufeinander zu verschwenkt, wodurch sie die Last 4 ergreifen.
Durch erneutes Betätigen der Antriebe 12 werden die Schwenkarme 5, 6 im Uhrzeigersinn verschwenkt, wobei die Last 4 angehoben wird. Während dieses Hebevorgangs der Last 4 wird diese durch Verdrehen des Drehkranzes 15 in ihrer Längsrichtung auf das Fahrzeug 1 ausgerichtet. Die Schwenkarme 5, 6 werden weiter in die in Figur 3 dargestellte Lage verschwenkt, in der die Gelenke 7 vertikal übereinander angeordnet sind. In dieser Lage befindet sich der Oberrahmen 9 und damit auch die Last 4 in der größten erreichbaren Höhe.

Anschließend wird der Unterrahmen 14 durch Betätigung des Antriebs 30 nach vorne auf die Fahrzeugkabine 22 zu bewegt, so daß die Last 4, wie in Figur 4 dargestellt, im wesentlichen über dem Fahrzeugrahmen 2 zu liegen kommt.

Schließlich werden die Schwenkarme 5, 6 durch Betätigen der Antriebe 12 weiter im Uhrzeigersinn verschwenkt, so daß die Last 4 über dem Fahrzeugrahmen 2 in deren Transportstellung abgesenkt wird, was in Figur 5 dargestellt ist. Die Last 4 kann ggf. in der Wanne 38 abgelegt werden, so daß die Platten 18 der Greifmittel 17 nur noch ein seitliches Wegrollen der Last 4 verhindern, ohne das Gewicht der Last 4 zu halten. Alternativ könnte die Last 4 auch während des Transports von den Greifmitteln 17 gehalten werden.

### Bezugszeichenliste

- 1: Fahrzeug
- 2: Fahrzeugrahmen
- 3: Hebevorrichtung
- 4: Last
- 5: hinterer Schwenkarm
- 6: vorderer Schwenkarm
- 7: Gelenk
- 8: oberes Ende des Schwenkarms
- 9: Oberrahmen
- 10: Winkel des vorderen Schwenkarms
- 11: Gelenk am Schwenkarm
- 12: Antrieb der Schwenkarme
- 13: Gelenk
- 14: Unterrahmen
- 15: Drehkranz
- 16: Drehachse
- 17: Greifmittel
- 18: Platte
- 19: Arm
- 20: Stütze
- 21: Stützfuß
- 22: Fahrzeugkabine
- 23: Gegengewicht
- 24: Kabel
- 25: Fernsteuerkonsole
- 26: innere Wange
- 27: äußere Wange
- 28: Abstandshalter
- 29: Führung
- 30: Antrieb des Unterrahmens
- 31: Antrieb des Drehkranzes
- 32: Schwenkachse des Armes
- 33: Antrieb des Greifmittels
- 34: Innenseite der Platte
- 35: Kante der Platte
- 36: Berührungslinie
- 37: unteres Ende der Platte
- 38: Wanne
- 39: Antrieb der Wanne
- 40: Auslaßöffnung der Wanne
- B: Boden
- H: Fahrzeugheck

## Patentansprüche

1. Fahrzeug zum Aufnehmen und Transportieren von Lasten (4), insbesondere von Rohrbündeln (4) eines Wärmetauschers, wobei das Fahrzeug (1) einen Rahmen (2) aufweist, an dem eine Hebevorrichtung (3) vorgesehen ist, die vier am Fahrzeugrahmen (2) schwenkbar abgestützte, mit Antrieben (12) in Wirkverbindung stehende Schwenkarme (6) aufweist, die oberseitig mit einem Oberrahmen (9) gelenkig verbunden sind, der von den Schwenkarmen (5, 6) in horizontaler Lage gehalten ist, **dadurch gekennzeichnet, daß** am Oberrahmen (9) unterseitig ein Unterrahmen (14) mittels eines Antriebs (30) längsverschiebbar gehalten ist, der in eine heckseitig über den Oberrahmen (9) überstehende Lage bringbar ist, und der Greifmittel (17) zur Aufnahme der Last (4) trägt.

2. Fahrzeug nach dem Oberbegriff des Anspruchs 1, wobei am Oberrahmen (9) unterseitig ein Unterrahmen (14) verschiebbar gehalten ist, oder nach Anspruch 1, **dadurch gekennzeichnet, daß** am Unterrahmen (14) Greifmittel (17) zur Aufnahme der Last (4) gehalten sind, die von mindestens zwei einander gegenüberliegenden, verschwenkbaren Platten (18) gebildet sind, die sich zumindest in der Greifstellung gegenseitig nach unten annähern.

3. Fahrzeug nach Anspruch 1 oder 2, **dadurch gekennzeichnet, daß** die Greifmittel (17) am Ober- (9) oder Unterrahmen (14) über einen Drehkranz (15) mit annähernd vertikaler Drehachse (16) drehbar gehalten sind.

4. Fahrzeug nach Anspruch 2 oder 3, **dadurch gekennzeichnet, daß** die die Greifmittel (17) bildenden Platten (18) oder mit diesen fest verbundene Arme (19) um voneinander beabstandete Schwenkachsen (32) schwenkbar gehalten sind, und die Platten (18) oder die Arme (19) von einem Antrieb (33) überbrückend erfaßt sind.

5. Fahrzeug nach mindestens einem der Ansprüche 2 bis 4, **dadurch gekennzeichnet, daß** die die Greif mittel (17) bildenden Platten (18) lastseitig konkav geformt sind.

6. Fahrzeug nach mindestens einem der Ansprüche 2 bis 5, **dadurch gekennzeichnet, daß** die die Greifmittel (17) bildenden Platten (18) an ihren unteren freien Enden (37) von der aufzunehmenden Last (4) weggebogen sind.

7. Fahrzeug nach mindestens einem der Ansprüche 2 bis 6, **dadurch gekennzeichnet, daß** die die Greifmittel (17) bildenden Platten (18) elastisch nachgiebig sind.

8. Fahrzeug nach mindestens einem der Ansprüche 1 bis 7 oder nach dem Oberbegriff des Anspruchs 1, **dadurch gekennzeichnet, daß** am Fahrzeugrahmen (2) unterhalb der in ihrer Transportstellung befindlichen Last (4) eine Flüssigkeit aufnehmende Wanne (38) vorgesehen ist.

9. Fahrzeug nach Anspruch 8, **dadurch gekennzeichnet, daß** die Wanne (38) in ihrer Länge verstellbar ausgebildet ist.

10. Fahrzeug nach mindestens einem der Ansprüche 1 bis 9, **dadurch gekennzeichnet, daß** mindestens zwei der Schwenkarme (6) der Hebevorrichtung (3) eine ihren Schwenkwinkel vergrößernde, gebogene oder abgewinkelte Form aufweisen.

11. Fahrzeug nach Anspruch 10, **dadurch gekennzeichnet, daß** im Bogen oder Winkel (10) des Schwenkarms (6) der Antrieb (12) angreift.

12. Fahrzeug nach mindestens einem der Ansprüche 1 bis 11, **dadurch gekennzeichnet, daß** der Schwenkarm (5, 6) zwei in Schwenkachsenrichtung voneinander beabstandete Wangen (26, 27) aufweist, wobei die zur Fahrzeugmitte gerichtete Wange (26) steifer ausgebildet ist.

13. Fahrzeug nach mindestens einem der Ansprüche 1 bis 12, **dadurch gekennzeichnet, daß** zur Abstützung des Fahrzeugs (1) beim Aufnehmen der Last (4) am Fahrzeugrahmen (2) im wesentlichen nach hinten ausfahrbare und auf dem Boden (B) abstützbare Stützen (20, 21) vorgesehen sind.

14. Fahrzeug nach mindestens einem der Ansprüche 1 bis 13, **dadurch gekennzeichnet, daß** die Antriebe (12, 30, 31, 33) von Hydraulikzylindern und/oder Hydraulikmotoren gebildet sind.

15. Fahrzeug nach mindestens einem der Ansprüche 1 bis 14, **dadurch gekennzeichnet, daß** die Antriebe (12, 30, 31, 33) von einer Fernsteuerkonsole (25) bedienbar sind.

## Claims

1. Vehicle for picking up and transporting loads (4), in particular tube bundles (4) of a heat exchanger, the vehicle (1) having a frame (2) on which a lifting apparatus (3) is provided, the said lifting apparatus having four swivel arms (6) which are supported on the vehicle frame (2) in a manner such that they can swivel, are operatively connected to drives (12) and are connected on the upper side to an upper frame (9) which is held in a horizontal position by the swivel arms (5, 6), **characterized in that** a lower frame (14) is held on the lower side of the upper frame (9), in a manner such that it can be displaced longitudinally by means of a drive (30), which lower frame can be brought into a position protruding on the rear side beyond the upper frame (9) and bears gripping means (17) for picking up the load.

2. Vehicle according to the precharacterizing clause of Claim 1, a lower frame (14) being held displaceably on the lower side of the upper frame (9), or according to Claim 1, **characterized in that** gripping means (17) for picking up the load (4) are held on the lower frame (14), the said gripping means being formed by at least two mutually opposite plates (18) which can be swivelled and, at least in the gripping position, come closer together in the downward direction.

3. Vehicle according to Claim 1 or 2, **characterized in that** the gripping means (17) are held rotatably on the upper frame (9) or lower frame (14) via a slewing ring (15) having an approximately vertical axis of rotation (16).

4. Vehicle according to Claim 2 or 3, **characterized in that** the plates (18) forming the gripping means (17) or arms (19) connected fixedly to the said plates are held in a manner such that they can swivel about spaced apart swivelling axes (32), and the plates (18) or the arms (19) are protected by a drive (33) spanning them.

5. Vehicle according to at least one of Claims 2 to 4, **characterized in that** the plates (18) forming the gripping means (17) are shaped concavely on the load side.

6. Vehicle according to at least one of Claims 2 to 5, **characterized in that** the plates (18) forming the gripping means (17) are bent away at the their lower, free ends (37) from the load (4) which is to be picked up.

7. Vehicle according to at least one of Claims 2 to 6, **characterized in that** the plates (18) forming the gripping means (17) are elastically flexible.

8. Vehicle according to at least one of Claims 1 to 7 or according to the precharacterizing clause of Claim 1, **characterized in that** a trough (38) holding a liquid is provided on the vehicle frame (2) below the load (4) situated in its transportation position.

9. Vehicle according to Claim 8, **characterized in that** the trough (38) is designed in a manner such that it can be adjusted in its length.

10. Vehicle according to at least one of Claims 1 to 9, **characterized in that** at least two of the swivel arms (6) of the lifting apparatus (3) have a bent or angled shape increasing their swivelling angle.

11. Vehicle according to Claim 10, **characterized in that** the drive (12) engages in the bend or angle (10) of the swivel arm (6).

12. Vehicle according to at least one of Claims 1 to 11, **characterized in that** the swivel arm (5, 6) has two cheeks (26, 27) which are spaced apart from each other in the direction of the swivelling axis, the cheek (26) directed towards the centre of the vehicle being of stiffer design.

13. Vehicle according to at least one of Claims 1 to 12, **characterized in that** supports (20, 21) which can be substantially extended to the rear and can be supported on the ground (B) are provided on the vehicle frame (2) in order to support the vehicle (1) when picking up the load (4).

14. Vehicle according to at least one of Claims 1 to 13, **characterized in that** the drives (12, 30, 31, 33) are formed by hydraulic cylinders and/or hydraulic motors.

15. Vehicle according to at least one of Claims 1 to 14, **characterized in that** the drives (12, 30, 31, 33) can be operated from a remote control console (25).

## Revendications

1. Véhicule pour recevoir et transporter des charges (4), en particulier des faisceaux tubulaires (4) d'un échangeur thermique, le véhicule (1) présentant un châssis (2) sur lequel est prévu un dispositif de levage (3), qui présente quatre bras pivotants (5, 6) supportés avec une possibilité de pivotement sur le châssis (2) du véhicule, en liaison active avec des commandes (12), et reliés de façon articulée côté supérieur à un cadre supérieur (9), qui est maintenu en position horizontale par les bras pivotants (5, 6), **caractérisé en ce qu'**un cadre inférieur (14) est maintenu côté inférieur sur le cadre supérieur (9) avec une possibilité de déplacement en longueur au moyen d'une commande (30), ce cadre pouvant être amené côté arrière dans une position en saillie par rapport au cadre supérieur (9) et supportant des moyens de préhension (17) pour recevoir la charge (4).

2. Véhicule suivant le préambule de la revendication 1, un cadre inférieur (14) étant maintenu avec une possibilité de déplacement côté inférieur sur le cadre supérieur (9), ou suivant la revendication 1, **caractérisé en ce que** des moyens de préhension (17) sont maintenus sur le cadre inférieur (14) pour recevoir la charge (4), ces moyens étant formés par au moins deux plaques (18) pivotantes, en vis-à-vis l'une de l'autre, qui s'approchent mutuellement vers le bas au moins dans la position de préhension.

3. Véhicule suivant l'une des revendications 1 et 2, **caractérisé en ce que** les moyens de préhension (17) sont maintenus avec une possibilité de rotation sur le cadre supérieur (9) ou le cadre inférieur (14) par l'intermédiaire d'une couronne rotative (15) ayant un axe de rotation (16) à peu près vertical.

4. Véhicule suivant l'une des revendications 2 et 3, **caractérisé en ce que** les plaques (18) formant les moyens de préhension (17) ou des bras (19) reliés fixement à ces dernières sont maintenus avec une possibilité de pivotement autour d'axes de pivotement (32) distants l'un de l'autre, et les plaques (18) ou les bras (19) sont interceptés par une commande (33) qui les ponte.

5. Véhicule suivant l'une au moins des revendications 2 à 4, **caractérisé en ce que** les plaques (18) formant les moyens de préhension (17) ont une forme concave côté charge.

6. Véhicule suivant l'une au moins des revendications 2 à 5, **caractérisé en ce que** les plaques (18) formant les moyens de préhension (17) sont pliées à leurs extrémités libres inférieures (37) à l'écart de la charge (4) à recevoir.

7. Véhicule suivant l'une au moins des revendications 2 à 6, **caractérisé en ce que** les plaques (18) formant les moyens de préhension (17) sont flexibles élastiquement.

8. Véhicule suivant l'une au moins des revendications 1 à 7 ou suivant le préambule de la revendication 1, **caractérisé en ce qu'**une cuve (38) recevant du liquide est prévue sur le châssis (2) du véhicule au-dessous de la charge (4) située dans sa position de transport.

9. Véhicule suivant la revendication 8, **caractérisé en ce que** la cuve (38) est réalisée avec une possibilité d'ajustement dans sa longueur.

10. Véhicule suivant l'une au moins des revendications 1 à 9, **caractérisé en ce qu'**au moins deux des bras pivotants (6) du dispositif de levage (3) présentent une forme pliée ou coudée, augmentant leur angle de pivotement.

11. Véhicule suivant la revendication 10, **caractérisé en ce que** la commande (12) agit dans le coude ou dans l'angle (10) du bras pivotant (6).

12. Véhicule suivant l'une au moins des revendications 1 à 11, **caractérisé en ce que** le bras pivotant (5, 6) présente deux joues (26, 27) distantes l'une de l'autre dans la direction de l'axe de pivotement, la joue (26) dirigée vers le centre du véhicule ayant une réalisation plus rigide.

13. Véhicule suivant l'une au moins des revendications 1 à 12, **caractérisé en ce que**, pour soutenir le véhicule (1) lors de la réception de la charge (4), des étais (20, 21) déployables essentiellement vers l'arrière et s'appuyant sur le sol (B) sont prévus sur le châssis (2) du véhicule.

14. Véhicule suivant l'une au moins des revendications 1 à 13, **caractérisé en ce que** les commandes (12, 30, 31, 33) sont formées par des vérins hydrauliques ou des moteurs hydrauliques.

15. Véhicule suivant l'une au moins des revendications 1 à 14, **caractérisé en ce que** les commandes (12, 30, 31, 33) sont manipulables à partir d'un pupitre de télécommande (25).
